# FASCICULE DE BREVET EUROPEEN

(11) **EP 1 267 690 B1**
(45) Date de publication et mention de la délivrance du brevet: **06.09.2006**
(21) Numéro de dépôt: 02701333.3
(22) Date de dépôt: 29.01.2002
(51) Int. Cl.: A47J 37/12

(54) **APPAREIL DE CUISSON A COUVERCLE SEPARABLE DU DISPOSITIF DE FILTRATION**
KOCHGERÄT MIT EINEM VON EINEM FILTER ENTFERNBAREN DECKEL
COOKING APPLIANCE WITH LID SEPARABLE FROM THE FILTERING DEVICE

(30) Priorité: 02.02.2001 FR 0101551
(43) Date de publication de la demande: 02.01.2003
(73) Titulaire: SEB S.A., 69132 Ecully Cedex (FR)
(72) Inventeur: PAYEN, Jean-Marc, F-21800 Quetigny (FR); BOULY, Bernard, F-21000 Dijon (FR)
(74) Mandataire: Martin, Didier Roland Valéry
(86) Numéro de dépôt international: PCT/FR2002/000337
(87) Numéro de publication internationale: WO 2002/062188

(56) Documents cités:
- EP-A- 1 029 490
- DE-U- 9 416 793
- US-A- 4 636 618

## Description

### DOMAINE TECHNIQUE

La présente invention se rapporte au domaine technique général des appareils de chauffe ou de cuisson d'aliments tels que des cuiseurs à riz par exemple, ou encore tels que des friteuses, lesdits appareils étant équipés de moyens de traitement des odeurs de cuisson pour éviter le rejet dans l'environnement d'odeurs désagréables.

La présente invention concerne un appareil de cuisson d'aliments comportant :
- un corps principal dans lequel est montée une cuve de cuisson,
- un couvercle monté de manière amovible relativement au corps principal et destiné à fermer de manière sensiblement étanche, ledit corps principal pendant la cuisson,
- un moyen de traitement des odeurs de cuisson associé au couvercle,
- des moyens de chauffe destinés à assurer la cuisson des aliments dans la cuve de cuisson.

### TECHNIQUE ANTERIEURE

Pour réduire l'émission d'odeurs de cuisson désagréables dans l'environnement immédiat d'un appareil de cuisson domestique, il a déjà été proposé d'une part de fermer de manière sensiblement hermétique le couvercle sur la cuve de cuisson de l'appareil, afin d'éviter le rejet direct dans l'atmosphère du flux de cuisson porteur d'odeurs désagréables, et d'autre part d'équiper généralement le couvercle ou une autre partie de l'appareil d'un moyen de traitement des odeurs assurant la filtration du flux de cuisson avant son rejet dans l'atmosphère.

Par ailleurs, il s'avère qu'il existe une demande croissante dans le domaine du petit électroménager pour des appareils d'utilisation et de nettoyage particulièrement simplifiés, et par exemple ne générant pas d'opérations complexes de montage et démontage en vue du nettoyage de tout ou partie de l'appareil. C'est ainsi que l'utilisateur apprécie fortement la possibilité de nettoyer tout ou partie des pièces d'un appareil de cuisson directement dans le lave-vaisselle.

Il est ainsi déjà connu, en particulier dans le domaine des appareils susceptibles de réaliser des fritures dans un bain d'huile, d'équiper le couvercle de tels appareils avec un filtre entièrement métallique, en vue précisément de permettre le passage direct au lave-vaisselle du couvercle et du filtre métallique intégré. Ce genre d'appareils ne présente donc pas d'inconvénients en matière de manipulation et de simplicité d'utilisation et de nettoyage. En revanche, le recours à des filtres entièrement métalliques conduit à un traitement incomplet du flux de cuisson, puisque les filtres métalliques ne permettent que le dépôt des particules graisseuses dans le filtre, sans pour autant assurer le traitement physico-chimique des particules et molécules générant l'apparition des odeurs.

C'est la raison pour laquelle il a déjà été proposé de remplacer les filtres métalliques par des cartouches filtrantes susceptibles d'assurer un traitement des odeurs plus élaboré et complet. Les cartouches filtrantes sont alors montées de manière amovible dans un logement du couvercle de la friteuse, tel que dans la demande de brevet WO-99/08581 ou dans le document US 4 636 618 A. Après un cycle de cuisson, lorsque l'utilisateur souhaite assurer le nettoyage du couvercle de la friteuse par passage au lave-vaisselle, il doit démonter la cartouche filtrante du couvercle avant de nettoyer le couvercle dans le lave-vaisselle. En pratique, il s'avère, la cartouche filtrante étant généralement au moins en partie dissimulée, que les utilisateurs oublient la plupart du temps de retirer la cartouche filtrante avant le passage au lave-vaisselle. Cet oubli est à la source d'une destruction totale ou partielle de la cartouche filtrante ou à l'origine de problèmes de fonctionnement ultérieurs de la friteuse impliquant notamment la présence d'eau dans l'huile de friture.

Il a enfin déjà été proposé de réaliser des couvercles d'appareils de cuisson, et notamment de friteuses, qui sont démontables et qui peuvent être lavés au lave-vaisselle directement car aucun système ou dispositif de filtration intégré n'est monté dans lesdits couvercles. Dans un tel cas, le système de filtration ou de traitement d'odeurs est disposé dans la partie inférieure de l'appareil, à l'exclusion du couvercle. Bien que donnant généralement satisfaction, de tels appareils sont de conception et de fabrication assez délicates dans la mesure où le système de filtration est complexe à réaliser, puisqu'il doit s'affranchir du traitement naturel du flux de cuisson à la partie supérieure de l'appareil, pour assurer son recyclage vers la partie basse où se situe le système de filtration.

### EXPOSE DE L'INVENTION

L'objet assigné à l'invention vise en conséquence à porter remède aux différents inconvénients de l'art antérieur mentionnés précédemment, et à proposer un nouvel appareil de cuisson d'aliments comportant un moyen de traitement des odeurs associé au couvercle, ledit appareil étant d'une utilisation et d'une conception particulièrement simples, tout en facilitant et son entretien et le bon fonctionnement optimal du moyen de traitement des odeurs.

Un autre objet de l'invention vise à proposer un nouvel appareil de cuisson d'aliments de réalisation particulièrement simple et robuste, tout en facilitant son ouverture.

Un autre objet de l'invention vise à fournir un nouvel appareil de cuisson d'aliments d'utilisation particulièrement commode et pratique.

Un autre objet de l'invention vise à proposer un nouvel appareil de cuisson d'aliments dont l'opération de séparation du couvercle est particulièrement simple à réaliser.

Un autre objet de l'invention vise à proposer un nouvel appareil de cuisson d'aliments dont l'ergonomie est particulièrement bien étudiée pour faciliter son nettoyage.

Les objets assignés à l'invention sont atteints à l'aide d'un appareil de cuisson d'aliments comportant :
- un corps principal dans lequel est montée une cuve de cuisson,
- un couvercle monté de manière amovible relativement au corps principal et destiné à fermer de manière sensiblement étanche ledit corps principal pendant la cuisson,
- un moyen de traitement des odeurs de cuisson associé au couvercle,
- des moyens de chauffe,
caractérisé en ce que le couvercle est monté amovible relativement au corps principal et au moyen de traitement des odeurs de cuisson, de manière à séparer automatiquement le moyen de traitement du couvercle lors de l'opération de séparation du couvercle du corps principal.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue en perspective générale, un appareil de cuisson d'aliments, en l'occurrence une friteuse, conforme à l'invention, le couvercle étant en position ouverte.
- La figure 2 illustre, selon une vue latérale, une friteuse conforme à l'invention et correspondant à celle montrée à la figure 1, le couvercle ayant été séparé du corps principal de la friteuse.
- La figure 3 illustre, selon une vue en perspective, un détail de réalisation du couvercle d'un appareil conforme à l'invention en position séparée d'un moyen de traitement des odeurs.
- La figure 4 illustre, selon une vue latérale partielle, un détail de réalisation d'un appareil de cuisson d'aliments conforme à l'invention, montrant le montage du moyen de traitement des odeurs sur le corps principal de l'appareil.

### MEILLEURE MANIERE DE REALISER L'INVENTION

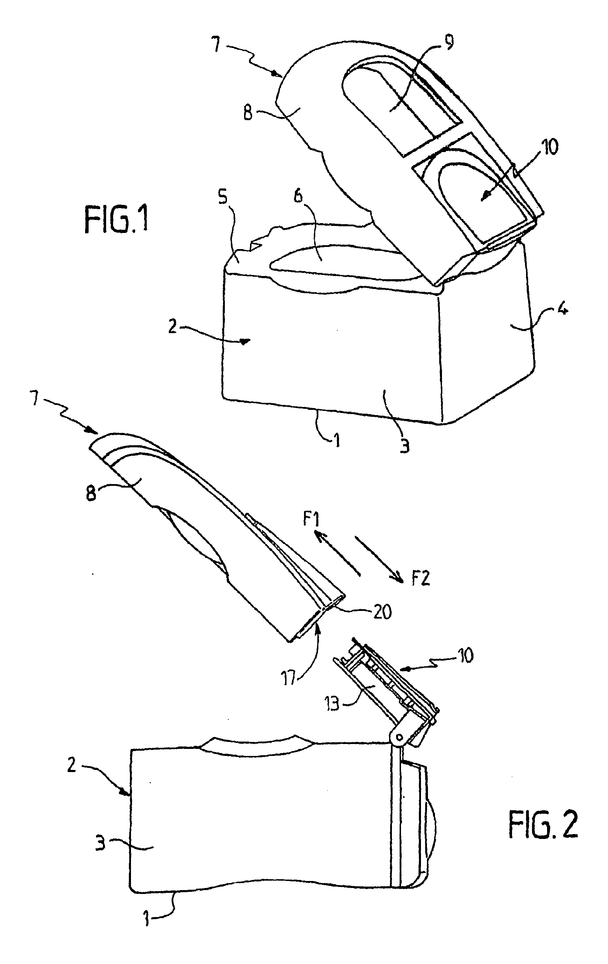

Dans les exemples de réalisation illustrés aux figures 1 à 4, l'appareil de cuisson d'aliments conforme à l'invention est constitué par une friteuse destinée à et conçue pour la réalisation de fritures d'aliments de toutes sortes dans de la matière grasse, telle que dans un bain d'huile ou dans de la graisse solide. Au sens de l'invention, il conviendra néanmoins d'entendre que le terme appareil de cuisson d'aliments recouvre l'ensemble des appareils de cuisson d'aliments domestiques susceptibles d'assurer la cuisson d'aliments, l'application à des appareils de friture n'étant qu'une application préférentielle, l'invention pouvant bien évidemment également s'appliquer à d'autres applications telles que des cuiseurs à riz ou des cuiseurs polyvalents, dès l'instant où ces appareils de cuisson mettent en oeuvre une cuisson dans une enceinte fermée sensiblement étanche.

L'appareil de cuisson d'aliments illustré aux figures 1 à 4, en l'occurrence une friteuse électrique, comporte une embase 1 destinée à former le socle de l'appareil et destinée à reposer sur un plan ou un support. L'embase 1 est généralement solidaire ou est rapportée sur une jupe externe 2, réalisée par exemple en matériau métallique ou en matériau plastique résistant à la chaleur et formant l'enveloppe externe de la friteuse. La jupe externe 2 est de manière classique réalisée par exemple en un matériau plastique bon marché et peu résistant à la chaleur tel que du polypropylène, ne résistant pas à l'énergie thermique dissipée en continu par le ou les éléments chauffant à haute température classiquement utilisés dans les friteuses électriques, et généralement disposés au fond proche de l'embase 1.

Les moyens de chauffe de l'appareil (non représentés aux figures) peuvent être classiquement composés d'éléments blindés ou d'éléments équivalents reliés également de manière classique à un bloc de connexion électrique (non représenté) et à un câblage électrique permettant de raccorder l'appareil au réseau électrique. De manière également connue de l'homme du métier, l'appareil de cuisson conforme à l'invention sera pourvu de l'ensemble des moyens de sécurité électriques et électroniques tel que capteurs de température, fusibles, etc., requis pour la conception de ces appareils. Ces éléments étant bien connus de l'homme du métier, ils ne seront en conséquence pas décrits plus en détails dans la suite de la description.

La jupe externe 2 pourra présenter toutes formes géométriques appropriées et esthétiques, par exemple circulaire, ovale, rectangulaire, de manière à définir par exemple des faces latérales 3 et des faces avant et arrière 4.

La partie supérieure de la jupe externe 2 sera avantageusement pourvue d'une bague annulaire 5 assurant la liaison mécanique entre la partie supérieure de la jupe externe 2 et une cuve de cuisson 6, généralement métallique, destinée à recevoir la matière grasse telle que l'huile de friture et les aliments à frire. Avantageusement, et tel que cela est bien connu de l'homme du métier et par exemple du brevet FR-87 06728, la bague annulaire sera avantageusement réalisée en un matériau thermiquement isolant et résistant en continu aux températures d'utilisation de la friteuse, et par exemple en polyamide, polyester, PBTP ou similaire, et supportera au moins en partie la cuve de cuisson 6.

Au sens de l'invention, l'embase 1, la jupe externe 2, la bague annulaire 5 et tout dispositif monté ou lié avec ces trois éléments, tels que le système d'articulation du couvercle sur ledit corps principal, formeront de manière générale le corps principal de l'appareil de cuisson d'aliments conforme à l'invention.

Selon l'invention, la friteuse comportera un couvercle 7, monté de manière amovible relativement au corps principal de la friteuse et destiné à fermer, de manière sensiblement étanche, par exemple par l'intermédiaire de joints d'étanchéité (non montrés aux figures), ledit corps principal pendant la cuisson.

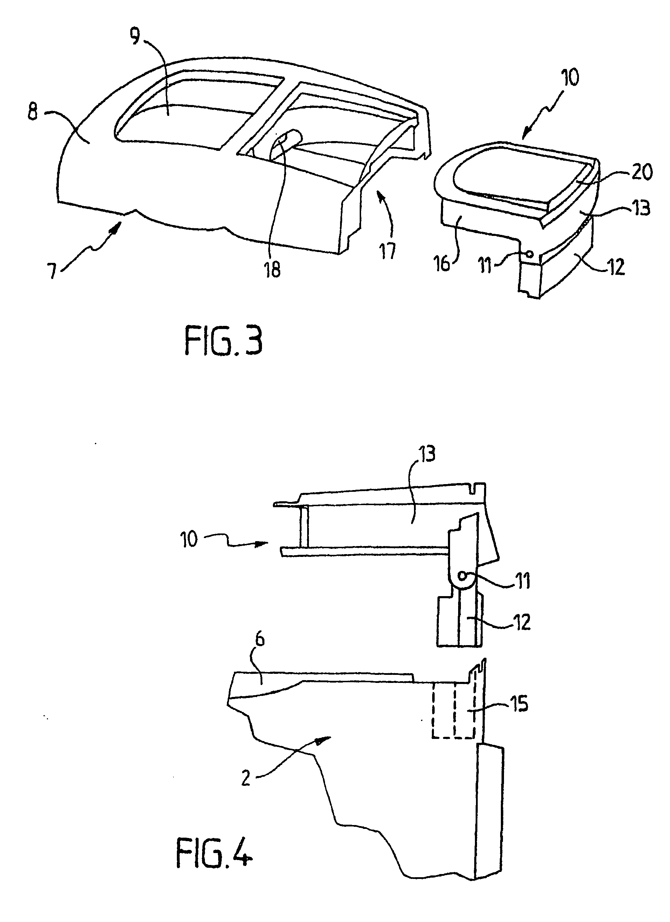

Avantageusement, et tel que montré aux figures 1 et 3 notamment, le couvercle 7 pourra être pourvu sur sa face supérieure 8 d'un hublot 9 permettant de surveiller l'évolution de la cuisson ou de la friture pendant le cycle de cuisson, et lorsque le couvercle est fermé sur le corps principal.

La cuisson d'aliments en milieu fermé, qu'il s'agisse de cuisson à la vapeur ou de friture, génère la production d'odeurs caractéristiques et souvent désagréables résultant des réactions chimiques liées à la cuisson proprement dite, et en particulier à l'émission de substances organiques volatiles.

Pour cette raison, l'appareil de cuisson d'aliments conforme à l'invention comportera et sera équipé d'un moyen de traitement des odeurs de cuisson 10 associé au couvercle 7, étant entendu qu'au sens de l'invention, il faut entendre sous le terme « *associé* » qu'en position de fermeture du couvercle 7, la cuisson de l'aliment intervient en milieu fermé, l'ensemble des flux de cuisson passant à travers le moyen de traitement des odeurs 10 pour y être traité. Au sens de l'invention, l'association du ou des moyens de traitement des odeurs de cuisson 10 avec le couvercle 7 recouvre donc un montage dudit moyen de traitement des odeurs 10 permettant au couvercle 7 et audit moyen 10 d'assurer ensemble cette fonction.

De manière connue en soit, le moyen de traitement des odeurs de cuisson 10 sera formé par tous moyens de traitement classiques connus de l'homme du métier, et par exemple par un filtre de carbone ou par un appareil de traitement thermique tel qu'un catalyseur.

Selon une caractéristique importante de l'invention, le couvercle 7 est monté amovible, c'est-à-dire de manière amovible relativement au corps principal et au moyen de traitement des odeurs de cuisson 10, de manière à pouvoir être séparé simultanément du corps principal et du moyen de traitement des odeurs 10, tel qu'illustré par exemple à la figure 2.

Grâce à cette particularité de montage, l'utilisateur peut en une seule opération et par un seul geste assurer la séparation du couvercle du reste des éléments de l'appareil de cuisson, et en particulier du moyen de traitement des odeurs 10. Cette particularité permet, à l'aide de manipulations particulièrement simples ne nécessitant pas le recours à des outils spécifiques, d'extraire le couvercle 7 et de pouvoir le faire passer directement au lave-vaisselle sans risque aucun de faire passer au lave-vaisselle le moyen de traitement des odeurs 10, puisque ce dernier est automatiquement séparé du couvercle 7 lors de l'opération d'extraction et de séparation du couvercle 7.

Selon l'invention, le moyen de traitement des odeurs 10 est monté solidaire, et par exemple de manière fixe, du corps principal de l'appareil avec possibilité ou non de démontage ou d'extraction relativement dudit corps principal, l'essentiel étant que lors de l'opération de démontage ou d'amovibilité du couvercle 7 par l'utilisateur sans outil spécifique et par un seul geste, le moyen de traitement des odeurs 10 reste fixé avec ou soit solidaire du corps principal, tout en permettant éventuellement ultérieurement la dissociation de ces deux éléments.

Selon une version particulièrement avantageuse de l'invention telle qu'illustrée aux figures 2 à 3 notamment, le couvercle 7 est monté sur le corps principal par une articulation 11 qui est intégrée dans le moyen de traitement des odeurs 10.

De manière particulièrement avantageuse, le moyen de traitement des odeurs 10 est formé par un sous-ensemble charnière comprenant une pièce de fixation 12 destinée à assurer l'interface avec le corps principal de l'appareil, et en conséquence solidaire dudit corps, et une pièce de traitement 13 correspondant à la pièce de traitement effective des odeurs, les deux pièces 12, 13 étant articulées entre elles par l'articulation 11.

Selon cette variante de l'invention particulièrement avantageuse, le couvercle 7 est en conséquence monté articulé et à rotation directement sur le moyen de traitement des odeurs 10 qui intègre et comprend l'articulation dudit couvercle. Selon cette variante préférentielle, le moyen de traitement des odeurs 10 est donc au moins en partie également mobile et rotatif, suivant ainsi les mouvements d'ouverture et de fermeture du couvercle 7 par l'intermédiaire de la pièce de traitement 13 qui est associée au couvercle 7 et à ses mouvements. Le fait de pouvoir disposer d'un sous-ensemble charnière avec une pièce de fixation 12 sur le corps principal permet d'intégrer dans le sous-ensemble des moyens appropriés d'assistance à l'ouverture, tels que des ressorts, freins, sécurités et détection susceptibles d'assurer une articulation ou une ouverture progressive du couvercle 7.

A titre de variante, il est néanmoins possible de réaliser un autre montage dans lequel le moyen de traitement 10 est associé avec le corps principal de l'appareil, un tel autre montage impliquant un montage fixe dudit moyen de traitement 10 sur le corps principal sans possibilité de rotation autour de l'articulation 11. Selon une telle variante (non représentée aux figures), le moyen de traitement des odeurs 10 pourrait être constitué d'une seule pièce fixée directement à demeure sur le corps principal, sans possibilité de suivre les mouvements du couvercle 7. Selon ce montage, le couvercle 7 est articulé de manière classique sur une articulation indépendante du moyen de traitement 10, et vient s'adapter par une forme conjuguée sur le moyen de traitement des odeurs 10 en position de fermeture.

Tel qu'illustré à la figure 4 illustrant la version préférentielle de l'invention, la pièce de fixation 12 est avantageusement montée sur le corps principal par emboîtement dans une cavité 15 prévue à cet effet. A titre de variante, d'autres types de montage peuvent être envisagés, et par exemple par vissage ou par tout autre moyen équivalent. A titre préférentiel, quelque soit le type de fixation envisagé, le montage pourra être démontable, et de préférence démontable par l'utilisateur sans équipement particulier.

Tel qu'illustré aux figures, la pièce de traitement 13 comprendra au moins une partie de l'élément de filtration des odeurs (non représenté en détails aux figures) qui est inséré dans une chambre 16, par exemple de forme sensiblement parallélépipédique, formant la partie principale de la pièce de traitement 13. Selon la variante de réalisation préférentielle illustrée aux figures 1 à 4, le couvercle 7 est en conséquence monté de manière amovible sur le moyen de traitement des odeurs 10, et en particulier sur la pièce de traitement 13 dont la totalité des éléments de filtration ou de traitement des odeurs est intégrée dans ladite pièce 13 et donc dans le sous-ensemble charnière.

Bien évidemment, à titre de variante, les éléments de filtration et/ou de traitement des odeurs peuvent être scindés et montés en partie sur le couvercle 7 et en partie sur le sous-ensemble charnière et réunis en une unité fonctionnelle lors du montage du couvercle 7.

Selon une variante particulièrement avantageuse de l'invention, le couvercle 7 sera monté de manière amovible par emboîtement relatif du couvercle 7 et de la pièce de traitement 13. Tel qu'illustré en particulier à la figure 3, le couvercle 7 comportera à cet effet un logement 17 ouvert vers sa partie arrière pour permettre à la pièce de traitement 13 de venir s'y insérer par emboîtement. Tel qu'illustré, le logement 17 sera de forme et de dimensions complémentaires à la pièce de traitement 13 pour permettre un simple emboîtement en force par translation, et sera par exemple ouvert à sa partie inférieure située au droit de la cuve de cuisson 6 et fermé à sa partie supérieure avec des orifices d'aération.

Le logement 17 comprendra un orifice 18 de communication avec le milieu de cuisson et débouchant au-dessus de la cuve de cuisson 6, de manière à permettre au flux de cuisson de pénétrer dans le moyen de traitement des odeurs 10 par cet orifice 18. A cette fin, le moyen de traitement 10, en particulier la pièce de traitement 13, comprendra un orifice d'entrée (non représenté aux figures) venant s'aligner avec l'orifice 18 lorsque le moyen de traitement des odeurs 10 est en place au fond du logement 17. De la même façon, le moyen de traitement des odeurs 10 comportera vers sa partie arrière une sortie 20 pour le flux ayant subi le traitement anti-odeurs.

Après un ou plusieurs cycles d'utilisation de l'appareil, lorsque l'utilisateur veut séparer le couvercle 10 du reste de l'appareil de cuisson, il ouvre le couvercle 7 pour le mettre par exemple dans la position inclinée illustrée à la figure 2 ou dans une position sensiblement verticale donnée par les moyens d'assistance à l'ouverture puis, par traction axiale dans le sens F1, assure la séparation du couvercle 7 du reste de la friteuse. Lors de cette opération d'extraction, le moyen de traitement des odeurs 10 s'extrait du logement 17 puisqu'il est solidaire du reste de l'appareil, ce qui libère le couvercle 7. Sans aucune autre manipulation particulière, le couvercle 7 est alors débarrassé du moyen de traitement des odeurs et peut être placé directement dans un lave-vaisselle.

Lorsque le couvercle 7 est nettoyé, et après avoir aligné le logement 17 avec le moyen de traitement des odeurs 10 et réalisé l'accostage axial relatif de ces deux pièces, l'utilisateur peut par simple pression selon la flèche F2 venir coiffer le moyen de traitement des odeurs 10 par ledit logement 17, réalisant la réinsertion dudit moyen de traitement des odeurs et la reconnexion sensiblement étanche entre les deux pièces.

A titre de variante complémentaire non décrite dans les figures, il est bien évidemment possible d'envisager de réaliser la connexion entre le couvercle 7 et le moyen de traitement des odeurs 10 par insertion d'une interface de connexion solidaire du couvercle 7 dans et à l'intérieur du moyen de traitement des odeurs 10, réalisant ainsi une connexion inverse de celle illustrée en particulier à la figure 3. Selon cette variante complémentaire, le moyen de traitement des odeurs 10 ne vient donc plus s'insérer dans le couvercle 7, ce dernier venant au contraire s'insérer lui-même par une pièce d'interconnexion dans le moyen de traitement des odeurs 10.

### POSSIBILITE D'APPLICATION INDUSTRIELLE

L'invention trouve son application industrielle dans la conception et la fabrication d'appareils de cuisson d'aliments, notamment de friteuses.

## Revendications

1. Appareil de cuisson d'aliments comportant :
- un corps principal dans lequel est montée une cuve de cuisson (6),
- un couvercle (7) monté de manière amovible relativement au corps principal et destiné à fermer de manière sensiblement étanche ledit corps principal pendant la cuisson,
- un moyen de traitement des odeurs de cuisson (10) associé au couvercle (7),
- des moyens de chauffe,
**caractérisé en ce que** le couvercle (7) est monté amovible relativement au corps principal et au moyen de traitement des odeurs de cuisson (10), de manière à séparer automatiquement le moyen de traitement (10) du couvercle (7) lors de l'opération de séparation du couvercle (7) du corps principal.

2. - Appareil selon la revendication 1 **caractérisé en ce que** le moyen de traitement des odeurs (10) est monté solidaire du corps principal.

3. Appareil selon la revendication 2 **caractérisé en ce que** le couvercle (7) est monté sur le corps principal par une articulation (11) qui est intégrée dans le moyen de traitement des odeurs (10).

4. - Appareil selon la revendication 3 **caractérisé en ce que** le moyen de traitement des odeurs (10) est formé par un sous-ensemble charnière comprenant une pièce de fixation (12) solidaire du corps principal et une pièce de traitement (13), les deux pièces étant articulées entre elles par l'articulation (11).

5. Appareil selon la revendication 4 **caractérisé en ce que** la pièce de fixation (12) est montée sur le corps principal par emboîtement, de préférence démontable.

6. Appareil selon l'une des revendications 4 ou 5 **caractérisé en ce que** la pièce de traitement (13) comprend au moins en partie l'élément de filtration des odeurs.

7. Appareil selon l'une des revendications précédentes **caractérisé en ce que** le couvercle (7) est monté de manière amovible sur le moyen de traitement des odeurs (10).

8. Appareil selon la revendication 7 et l'une des revendications 4 à 6 **caractérisé en ce que** le couvercle (7) est monté sur la pièce de traitement (13).

9. - Appareil selon la revendication 8 **caractérisé en ce que** le couvercle (7) est monté amovible par emboîtement relatif du couvercle et de la pièce de traitement (13).

10. Appareil selon la revendication 9 **caractérisé en ce que** le couvercle comporte un logement (17) ouvert à sa partie arrière pour permettre à la pièce de traitement (13) de venir s'y insérer par emboîtement.

11. - Appareil selon la revendication 10 **caractérisé en ce que** logement (17) comprend un orifice (18) de communication avec le milieu de cuisson destiné à être aligné avec un orifice d'entrée correspondant ménagé dans la pièce de traitement (13).

12. Appareil selon l'une des revendications précédentes **caractérisé en ce qu'**il est constitué par une friteuse.

## Claims

1. Food cooking appliance comprising:
- a main body in which a cooking vessel (6) is mounted,
- a lid (7) mounted so as to be removable relative to the main body and intended to close the said main body in a substantially sealed manner during cooking,
- a cooking odour treatment means (10) associated with the lid (7),
- heating means,
**characterised in that** the lid (7) is mounted so as to be removable relative to the main body and to the cooking odour treatment means (10), so as to automatically separate the treatment means (10) from the lid (7) during the operation of separating the lid (7) from the main body.

2. Appliance according to Claim 1, **characterised in that** the odour treatment means (10) is mounted so as to be integral with the main body.

3. Appliance according to Claim 2, **characterised in that** the lid (7) is mounted on the main body by an articulation (11) integrated in the odour treatment means (10).

4. Appliance according to Claim 3, **characterised in that** the odour treatment means (10) is formed by a hinge subassembly comprising a fixing piece (12) integral with the main body and a treatment piece (13), the two pieces being articulated on each other by means of the articulation (11).

5. Appliance according to Claim 4, **characterised in that** the fixing piece (12) is mounted on the main body by fitting in, preferably demountable.

6. Appliance according to Claim 4 or 5, **characterised in that** the treatment piece (13) at least partly comprises the odour filtration element.

7. Appliance according to one of the preceding claims, **characterised in that** the lid (7) is mounted removably on the odour treatment means (10).

8. Appliance according to Claim 7 and one of Claims 4 to 6, **characterised in that** the lid (7) is mounted on the treatment piece (13).

9. Appliance according to Claim 8, **characterised in that** the lid (7) is mounted so as to be removable by relative fitting together of the lid and treatment piece (13).

10. Appliance according to Claim 9, **characterised in that** the lid comprises a housing (17) open at its rear part to enable the treatment piece (13) to be inserted therein by fitting in.

11. Appliance according to Claim 10, **characterised in that** the housing (17) comprises an orifice (18) for communication with the cooking medium intended to be aligned with a corresponding inlet orifice provided in the treatment piece (13).

12. Appliance according to one of the preceding claims, **characterised in that** it consists of a deep fryer.

## Patentansprüche

1. Gerät zum Kochen von Nahrungsmitteln, umfassend:
- einen Hauptkörper, in dem eine Kochwanne (6) befestigt ist,
- einen Deckel (7), der zum Hauptkörper abnehmbar befestigt und dazu bestimmt ist, den Hauptkörper während des Kochens im Wesentlichen dicht zu verschließen,
- ein Mittel zur Behandlung der Kochgerüche (10), das dem Deckel (7) zugeordnet ist,
- Heizmittel,
**dadurch gekennzeichnet, dass** der Deckel (7) zum Hauptkörper und zum Mittel zur Behandlung der Kochgerüche (10) abnehmbar befestigt ist, um während des Schrittes des Abnehmens des Deckels (7) vom Hauptkörper das Mittel zur Behandlung (10) automatisch vom Deckel (7) zu trennen.

2. Gerät nach Anspruch 1, **dadurch gekennzeichnet, dass** das Mittel zur Behandlung der Gerüche (10) fest mit dem Körper verbunden ist.

3. Gerät nach Anspruch 2, **dadurch gekennzeichnet, dass** der Deckel (7) auf dem Hauptkörper durch ein Gelenk (11) befestigt ist, das in das Mittel zur Behandlung der Gerüche (10) integriert ist.

4. Gerät nach Anspruch 3, **dadurch gekennzeichnet, dass** das Mittel zur Behandlung der Gerüche (10) von einer Scharnieruntereinheit gebildet ist, umfassend einen fest mit dem Hauptkörper verbundenen Befestigungsteil (12) und einen Behandlungsteil (13), wobei die beiden Teile durch ein Gelenk (11) miteinander verbunden sind.

5. Gerät nach Anspruch 4, **dadurch gekennzeichnet, dass** der Befestigungsteil (12) auf dem Hauptkörper durch Ineinanderstecken befestigt ist, vorzugsweise demontierbar befestigt ist.

6. Gerät nach einem der Ansprüche 4 oder 5, **dadurch gekennzeichnet, dass** der Behandlungsteil (13) mindestens teilweise das Element zur Filterung der Gerüche umfasst.

7. Gerät nach einem der vorhergehenden Ansprüche, **dadurch gekennzeichnet, dass** der Deckel (7) abnehmbar auf dem Mittel zur Behandlung der Gerüche (10) befestigt ist.

8. Gerät nach Anspruch 7 und einem der Ansprüche 4 bis 6, **dadurch gekennzeichnet, dass** der Deckel (7) auf dem Behandlungsteil (13) befestigt ist.

9. Gerät nach Anspruch 8, **dadurch gekennzeichnet, dass** der Deckel (7) durch Ineinanderstecken des Deckels und des Behandlungsteils (13) abnehmbar befestigt ist.

10. Gerät nach Anspruch 9, **dadurch gekennzeichnet, dass** der Deckel eine auf seinem hinteren Teil offene Lagerung (17) umfasst, um es dem Behandlungsteil (13) zu ermöglichen, sich in diese einzufügen.

11. Gerät nach Anspruch 10, **dadurch gekennzeichnet, dass** die Lagerung (17) eine Öffnung (18) zur Verbindung mit dem Kochmedium umfasst, die dazu bestimmt ist, mit einer entsprechenden Eingangsöffnung, die in dem Behandlungsteil (13) vorgesehen ist, ausgerichtet zu werden.

12. Gerät nach einem der vorhergehenden Ansprüche, **dadurch gekennzeichnet, dass** es eine Fritteuse bildet.
